# EUROPEAN PATENT APPLICATION

(11) **EP 2 815 836 A1**
(43) Date of publication of application: **24.12.2014**
(21) Application number: 14002108.0
(22) Date of filing: 18.06.2014
(51) Int. Cl.: B23D 61/12

(54) **Reciprocating blade**

(30) Priority: 18.06.2013 US 201361836502 P
(71) Applicant: Irwin Industrial Tool Company, Huntersville, NC 28078 (US)
(72) Inventor: Green, Matthew C., Amherst, MA 01002 (US)
(74) Representative: Schmid, Nils T.F.

(57) **Abstract**

A reciprocating blade has a blade body and a tang located at one end of the blade body. The blade body has a distal portion located on an opposite end of the blade body relative to the tang. The distal portion defines a tip and at least one aperture extending through the blade body. A cutting edge extends along the blade body between the tang and the tip.

## Description

### CROSS-REFERENCE TO RELATED APPLICATION

This patent application claims benefit under 35 U.S.C. § 119 to similarly-titled U.S. Provisional Patent Application No. 61/836,502, filed on June 18, 2013, which is hereby incorporated by reference in its entirety as part of the present disclosure.

### FIELD OF THE INVENTION

The present invention relates to recip blades, and more particularly, to recip blades with apertures or other features that reduce the mass per unit area in the distal portion of the blade in comparison to the remainder of the blade, and/or reduce oscillations or vibrations in the distal portion of the blade during cutting.

### BACKGROUND INFORMATION

Shorter recip blades tend to last longer than longer recip blades when cutting the same applications. During cutting, the distal portions of the blades tend to oscillate or whip from side to side or laterally, and the longer the blade, the greater is the tendency of the distal portion to whip. When the oscillating or whipping portion of the blade enters a work piece, the sides of the teeth engage the kerf and are subjected to lateral loads corresponding to the level of oscillation or whipping. This type of lateral teeth loading, and/or the oscillation or whipping, can be unproductive and can give rise to lower blade life than desired.

It is an object of the invention to overcome one or more of the above-described drawbacks and/or disadvantages of the prior art.

### SUMMARY OF THE INVENTION

In accordance with one aspect, the present invention is directed to a recip blade comprising a blade body and a tang located at one end of the blade body. The blade body includes a distal portion located on an opposite end of the blade body relative to the tang. The distal portion defines a tip and at least one aperture extending through the blade body. A cutting edge extends along the blade body between the tang and the tip.

In some embodiments of the present invention, the at least one aperture reduces a mass per unit area of the distal portion of the blade body in comparison to a remainder of the blade body.

In some embodiments of the present invention, the distal portion defines a length, and the at least one aperture extends substantially along the length of the distal portion. In some such embodiments, the blade body defines a length, and the length of the distal portion is preferably no more than about 3/5 the length of the blade body, is more preferably no more than about 1/2 the length of the blade body, and is even more preferably no more than about 2/5 the length of the blade body.

In some embodiments of the present invention, the blade body defines a plurality of apertures axially spaced relative to each other and extending substantially along the length of the distal portion.

In some embodiments of the present invention, the blade body defines a first portion extending between the tang and the distal portion, and the first portion of the blade body is substantially solid. In some such embodiments, the first portion defines a first minimum width and the distal portion defines a second minimum width. The second minimum width is preferably at least about 2/3 the first minimum width, is more preferably at least about 3/4 the first minimum width, and is even more preferably at least about 7/8 the first minimum width.

In some embodiments of the present invention, the distal portion defines a width, and the at least one aperture preferably extends throughout at least about 2/5 the width of the distal portion, more preferably extends throughout at least about 3/5 the width of the distal portion, and even more preferably extends throughout at least about 4/5 the width of the distal portion.

In some embodiments of the present invention, the cutting edge includes a cut area defined by teeth that predominantly engage a work piece, and the cut area is located substantially outside of the distal portion of the blade.

In some embodiments of the present invention, the recip blade is a metal cutting recip blade, and the cutting edge includes a plurality of teeth configured for cutting metal work pieces.

In accordance with another aspect, the present invention is directed to a recip blade comprising a blade body and a tang located at one end of the blade body. The blade body includes a distal portion located on an opposite end of the blade body relative to the tang and defining a tip, a first portion extending between the tang and the distal portion, means for reducing a mass per unit area of the distal portion in comparison to the first portion, and a cutting edge extending along the blade body between the tang and the tip. In some embodiments of the present invention, the means for reducing the mass per unit area is at least one aperture extending through the distal portion of the blade body.

One advantage of the present invention is that the at least one aperture or other means reduces the mass per unit area in the distal portion of the blade body which can, in turn, reduce the oscillating or whipping of the distal portion of the blade body and increase blade life.

Other objects and advantages of the present invention, and/or of the currently preferred embodiments thereof, will become more readily apparent in view of the following detailed description of the currently preferred embodiments and the accompanying drawings.

### BRIEF DESCRIPTION OF THE DRAWINGS

Figure 1 is a side view of a recip blade of the present invention; and
Figure 2 is a side view of an alternate embodiment of the recip blade.

### DETAILED DESCRIPTION OF THE PREFERRED EMBODIMENTS

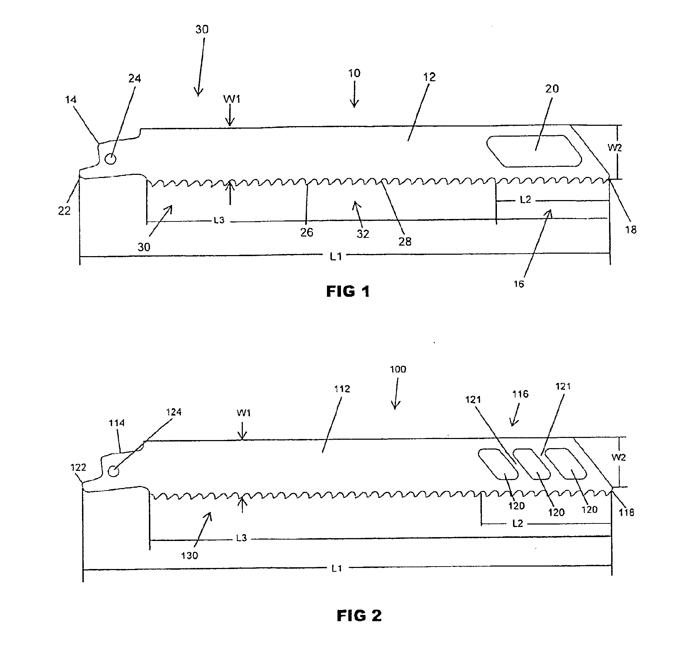

In Figure 1, an embodiment of a recip blade representing the present invention is indicated generally by the reference numeral 10. The recip blade 10 comprises a blade body 12 and a tang 14 located at one end of the blade body 12. The blade body 12 includes a distal portion 16, which is located at an opposite end of the blade body 12 relative to the tang 14, and defines a tip 18 and at least one aperture 20 extending through the blade body 12. The tang 14 includes a tang stem 22 and a tang aperture 24 extending through the tang 14. The recip blade 10 also includes a cutting edge 26 that extends along the blade body 12, between the tang 14 and the tip 18. In some embodiments, the recip blade 10 is a metal cutting recip blade, and the cutting edge 26 includes a plurality of teeth 28 configured in a manner known to those of ordinary skill in the pertinent art for cutting metal work pieces. However, as may be recognized by those of ordinary skill in the pertinent art based on the teachings herein, the cutting edge 26 may take any of numerous different configurations that are currently known, or that later become known, including, for example, bi-metal cutting teeth or carbon-tipped teeth, and teeth of any of numerous different forms, pitch patterns, set patterns and/or other configurations.

The aperture 20, which can be formed in a variety of ways including, but not limited to, punching, laser cutting, or water-jet cutting, reduces the mass per unit area of the distal portion 16 of the blade body 12 in comparison to the remainder of the blade body 12. This, in turn, moves the center of mass of the recip body 10 away from the distal portion 16 to aid in the reduction of vibration during use. By reducing vibrations during use, the life of the recip blade 10 can be increased.

In the illustrated embodiment, the blade body 12 defines a length "L1" of approximately one hundred fifty-two millimeters (152 mm) (i.e., approximately six inches (6 in.)), the distal portion 16 defines a length "L2" of approximately fifty millimeters (50 mm) (i.e., approximately two inches (2 in.)), and the cutting edge defines a length "L3" of approximately fifty-four millimeters (54 mm) (i.e., approximately five and one-eight inches (5-1/8 in.)). However, as may be recognized by those of ordinary skill in the pertinent art based on the teachings herein, these dimensions are only exemplary and may be changed as desired or otherwise as required.

In the illustrated embodiment, the aperture 20 extends along substantially the length L2 of the distal portion 16. In some such embodiments, the length L2 of the distal portion 16 is preferably no more than about three-fifths (3/5) the length L1 of the blade body 12, is more preferably no more than about one-half (1/2) the length L1 of the blade body 12, and is even more preferably no more than about two-fifths (2/5) the length L1 of the blade body 12.

The blade body 12 defines a first portion 30 extending between the tang 14 and the distal portion 16. The cutting edge 26 includes a cut area 32 defined by teeth 28 that predominantly engage a work piece (not shown). The cut area 32 is located substantially outside of the distal portion 16 of the blade body 12, and is preferably located completely outside of the cut area 32. Alternatively, the aperture 20 is preferably located substantially outside of the cut area 32, and is preferably located completely outside of the cut area 32. In the illustrated embodiment, the first portion 30 is substantially solid; however, as may be recognized by those of ordinary skill in the pertinent art based on the teachings herein, the first portion 30 may define one or more apertures where the mass per unit area of the first portion 30 is nevertheless sufficiently greater than the mass per unit area of the distal portion 16 to achieve one or more advantages of the invention.

The first portion 30 defines a first minimum width W1 and the distal portion 16 defines a second minimum width W2. In the illustrated embodiment, the first minimum width W1 is approximately equal to the second minimum width W2. However, as may be recognized by those of ordinary skill in the pertinent art based on the teachings herein, the first and second widths W1, W2 may be adjusted as desired or otherwise as may be required. For example, in some embodiments, the second minimum width W2 is preferably at least about two-thirds (2/3) the first minimum width W1, is more preferably at least about three-fourths (3/4) the first minimum width W1, and is even more preferably at least about seven-eights (7/8) the first minimum width W1. Also, in some embodiments, the aperture 20 preferably extends throughout at least about two-fifths (2/5) the second minimum width W2 of the distal portion 16, more preferably extends throughout at least about three-fifths (3/5) the second minimum width W2, and even more preferably extends throughout at least about four-fifths (4/5) the second minimum width W2.

As may be recognized those of ordinary skill in the pertinent art based on the teachings herein, additional and/or alternative features or configurations may be employed to reduce the mass per unit area of the distal portion 16 of the blade body 12 in comparison to the first portion 30 of the blade body 12. For example, the second minimum width W2 of the distal portion 16 can be less than the first minimum width W1 of the first portion 30 of the blade body 12. In one such embodiment, the aperture 20 is eliminated, but the second minimum width W2 is set sufficiently small so that the mass per unit area of the distal portion 16 is about the same as the wider distal portion with the aperture 20 formed therein.

In Figure 2, another embodiment of a recip blade representative of the present invention is indicated generally by the reference numeral 100. The recip blade 100 is substantially the same as the recip blade 10 described above in connection with Figure 1, and therefore like reference numerals preceded by the numeral "1" are used to indicate like elements. The recip blade 100 comprises a blade body 112 including a distal portion 116 that defines a plurality of apertures 120. As can be seen, the apertures 120 are axially spaced relative to each other and extend along substantially the length of the distal portion 116. In the illustrated embodiment, the distal portion 116 includes three apertures 120 with substantially solid portions 121 therebetween. However, as may be recognized by those of ordinary skill in the pertinent art based on the teachings herein, the distal portion 116 may include any number of apertures that may take any of numerous different shapes, sizes and/or configurations.

As may be recognized by those of ordinary skill in the pertinent art based on the teachings herein, numerous changes and modifications may be made to the above-described and other embodiments of the present invention without departing from its scope as defined in the claims. For example, the cutting edge may be configured to cut metal, wood, or combinations of wood and metal (such as for demolition). In addition, the distal portion may define any of numerous different types, shapes, and/or configurations of apertures, and/or may define any of numerous different widths in comparison to the width of the remainder of the blade body, in order to, for example, reduce the mass per unit area of the distal portion to a desired level to achieve one or more advantages of the invention. In addition, the recip blade may include a cutting edge on only one side of the blade body as shown, or may include cutting edges on opposite sides of the blade body relative to each other. Accordingly, this detailed description of embodiments is to be taken in an illustrative sense, as opposed to a limiting sense.

The features disclosed in the above description, the figures and the claims may be significant for the realisation of the invention in its different embodiments individually and in any combination.

### Reference numerals

- 10, 110: recip blade
- 12, 112: blade body
- 14, 114: tang
- 16, 116: distal portion
- 18, 118: tip
- 20, 120: aperture
- 26: cutting edge
- 30, 130: first portion
- 32: cut area
- L1: length of the blade body
- L2: length of the distal portion
- W1, W2: width

## Claims

1. A recip blade (10, 110), comprising:
a blade body (12, 112); and
a tang (14, 114) located at one end of the blade body (12, 112),
wherein the blade body (12, 112) includes a distal portion (16, 116) located on an opposite end of the blade body (12, 112) relative to the tang (14, 114) and defining a tip (18, 118) and at least one aperture (20, 120) extending through the blade body (12, 112), and a cutting edge (26) extending along the blade body (12, 112) between the tang (14, 114) and the tip (18, 118).

2. A recip blade (10, 110) as defined in claim 1, wherein the at least one aperture (20, 120) reduces a mass per unit area of the distal portion (16, 116) of the blade body (12, 112) in comparison to a remainder of the blade body (12, 112).

3. A recip blade (10, 110) as defined in claim 1 or 2, wherein the distal portion (16, 116) defines a length (L2), and the at least one aperture (20, 120) extends substantially along the length (L2) of the distal portion (16, 116).

4. A recip blade (10, 110) as defined in any of the preceding claims, wherein the blade body (12, 112) defines a length (L1), and a length (L2) of the distal portion (16, 116) is no more than about 3/5 the length (L1) of the blade body (12, 112), preferably no more than about 1/2 the length (L1) of the blade body (12, 112), more preferably no more than about 2/5 the length (L1) of the blade body(12, 112).

5. A recip blade (10, 110) as defined in any of the preceding claims, wherein the blade body (12, 112) defines a plurality of apertures (20, 120) axially spaced relative to each other and extending substantially along a length (L2) of the distal portion.

6. A recip blade (10, 110) as defined in any of the preceding claims, wherein the blade body (12, 112) defines a first portion (30, 130) extending between the tang (14, 114) and the distal portion (16, 116), and the first portion (30, 130) of the blade body (12, 112) is substantially solid.

7. A recip blade (10, 110) as defined in claim 6, wherein the first portion (30, 130) defines a first minimum width (W1), the distal portion (16, 116) defines a second minimum width (W2), and the second minimum width (W2) is at least about 2/3 the first minimum width (W1).

8. A recip blade (10, 110) as defined in claim 7, wherein the second minimum width (W2) is at least about 3/4 the first minimum width (W1).

9. A recip blade (10, 110) as defined in claim 7 or 8, wherein the second minimum width (W2) is at least about 7/8 the first minimum width (W1).

10. A recip blade (10, 110) as defined in any of the preceding claims, wherein the distal portion (16, 116) defines a width (W2), and the at least one aperture (20, 120) extends throughout at least about 2/5 the width (W2 of the distal portion (16, 116).

11. A recip blade (10, 110) as defined in any of the preceding claims, wherein the at least one aperture (20, 120) extends throughout at least about 3/5 a width (W2) of the distal portion (16, 116).

12. A recip blade (10, 110) as defined in any of the preceding claims, wherein the at least one aperture (20, 120) extends throughout at least about 4/5 a width (W2) of the distal portion (16, 116).

13. A recip blade (10, 110) as defined in any of the preceding claims, wherein the cutting edge (26) includes a cut area (32) defined by teeth that predominantly engage a work piece, and the cut area (32) is located substantially outside of the distal portion (16, 116) of the blade (12, 112).

14. A recip blade (10, 110) as defined in any of the preceding claims, wherein the recip blade (10, 110), a metal cutting recip blade (10, 110) and the cutting edge (26) includes a plurality of teeth configured for cutting metal work pieces.
